# FASCICULE DE BREVET EUROPEEN

(11) **EP 1 374 163 B1**
(45) Date de publication et mention de la délivrance du brevet: **29.09.2004**
(21) Numéro de dépôt: 02724392.2
(22) Date de dépôt: 29.03.2002
(51) Int. Cl.: G06K 19/077

(54) **CARROUSEL A PUCES ELECTRONIQUES**
MIKROCHIP-DREHPLATTE
MICROCHIP TURNTABLE

(30) Priorité: 03.04.2001 FR 0104615
(43) Date de publication de la demande: 02.01.2004
(73) Titulaire: FRANCE TELECOM, 75015 Paris (FR)
(72) Inventeur: CLERC, Fabrice, F-14550 Blainville Sur Orne (FR); LE THERISIEN, Philippe, F-75116 Paris (FR)
(74) Mandataire: Jeune, Pascale
(86) Numéro de dépôt international: PCT/FR2002/001125
(87) Numéro de publication internationale: WO 2002/082369

(56) Documents cités:
- DE-A- 19 737 565
- FR-A- 2 795 905

## Description

### Domaine de l'invention

La présente invention se rapporte à un dispositif de support de puces électroniques, à une carte électronique adaptée à accueillir un tel dispositif, à un lecteur de puces électroniques et à un équipement à puces électroniques comprenant un tel lecteur.

L'invention s'inscrit dans le domaine de l'utilisation des puces électroniques, notamment pour réaliser un échange d'informations nécessitant une communication sécurisée mettant en oeuvre divers types de cartes telles que cartes bancaires, cartes santé, cartes pré ou post-payées, cartes d'abonnement, cartes de fidélité, porte-monnaie électronique, etc..

A titre d'exemple, l'invention trouve une application très avantageuse en ce qu'elle permet à un utilisateur d'un téléphone mobile, par le choix d'un module électronique parmi plusieurs sur une même carte électronique insérée dans le téléphone, de différencier ses communications téléphoniques par un numéro téléphonique lié au module électronique sélectionné sur la carte.

### Description de l'art antérieur

Actuellement, l'utilisateur possède différentes cartes électroniques s'il veut faire appel à des services différents ou s'il veut être identifié par un numéro téléphonique propre à des transactions particulières. Ainsi, pour séparer ses communications privées de ses communications professionnelles, l'utilisateur possède respectivement une première carte téléphonique à laquelle est attaché un premier numéro téléphonique et une seconde carte téléphonique à laquelle est attaché un second numéro téléphonique. Lorsque l'utilisateur veut effectuer un appel téléphonique privé, il insère la première carte électronique dans le lecteur de puce du téléphone. Et, lorsque l'utilisateur veut effectuer un appel téléphonique professionnel, il insère la seconde carte électronique dans le lecteur de puce du téléphone.

Pour résoudre le problème de la multiplication des cartes, il existe des puces qui hébergent plusieurs applications différentes.

Toutefois, ces puces soulèvent d'une part le problème de la capacité des puces électroniques et d'autre part, le problème de sécurité lié au manque d'étanchéité entre les différentes applications présentes sur une même puce. Les fournisseurs d'applications soulèvent en outre comme problèmes la disparité des périodes de validité des applications partageant un même support physique, et le partage de la responsabilité juridique en cas d'utilisation abusive d'une carte.

Aussi, le problème technique à résoudre par l'objet de la présente invention est de proposer un dispositif de support de puces électroniques, destiné à mettre en position de lecture de puce, dans un lecteur de puce, un module électronique comprenant une puce électronique, qui permette des applications multiples mettant en oeuvre des puces électroniques tout en garantissant une bonne étanchéité entre les applications et une limitation du nombre de cartes nécessaires.

DE-A-19 737 565 divulgue une carte à puce ayant un carousel pour loger des modules électroniques. L'utilisateur peut choisir un des modules en tournant le carrousel dans la carte.

### Résumé de l'invention

Une solution au problème technique posé consiste, selon la présente invention, en ce que ledit dispositif consiste en un carrousel qui comprend :
- un disque supérieur équipé d'au moins deux moyens d'hébergement et de maintien d'un module électronique, chaque moyen hébergeant un module électronique,
- un disque inférieur,
- un moyen de rotation pour mettre en position de lecture de puce un des modules électroniques présents sur le disque supérieur par une rotation d'au moins le disque supérieur.

L'invention a aussi pour objet une carte à puce électronique adaptée pour accueillir un dispositif de support de puces électroniques selon l'invention, la carte comprenant un évidement pour accueillir un carrousel.

L'invention a aussi pour objet un lecteur de puces électroniques comprenant un réceptacle pour insérer un dispositif de support de puces électroniques selon l'invention, ou une carte équipée d'un dispositif de support de puces électroniques selon l'invention, et un moyen d'entraînement en rotation du carrousel.

Ainsi, le dispositif de support de puces électroniques selon l'invention permet à un utilisateur de sélectionner un module électronique parmi plusieurs modules électroniques présents sur un support, telle une carte à puce. Chaque module électronique supportant une application déterminée, tel l'établissement de communications à partir d'un numéro donné ou telle une transaction électronique, le choix d'un module électronique correspond au choix d'une application. L'utilisateur sélectionne le module électronique par l'intermédiaire du moyen de rotation.

Le dispositif de support de puces électroniques conforme à l'invention résout le problème posé. En effet, chaque application étant implantée sur un module électronique différent, c'est-à-dire sur une puce différente, il n'y a pas de partage de mémoire. Ainsi, le dispositif assure une étanchéité totale avec un seul support qui peut prendre la forme d'une carte électronique.

Selon un mode de réalisation particulier du dispositif, le moyen de rotation est une encoche de forme parallélépipédique formée dans le disque supérieur. En enfilant par exemple une pièce de monnaie dans cette encoche, l'utilisateur peut positionner manuellement en position de lecture de puce un des modules électroniques présents sur le disque supérieur. Ce mode de réalisation a pour avantage d'être simple et de ne pas nécessiter de modification des lecteurs de puce existants pour faire tourner le carrousel.

Le moyen d'hébergement et de maintien d'un module électronique consiste en une cavité. Selon un premier mode de réalisation particulier du moyen d'hébergement et de maintien, la cavité est équipée de glissières dans lesquelles est glissé le module électronique. Selon un second mode de réalisation particulier du moyen d'hébergement et de maintien, les parois latérales de la cavité sont équipées d'une fente pour y glisser les bords d'un module. Ces modes de réalisation permettent avantageusement à l'utilisateur de configurer personnellement son dispositif et éventuellement de remplacer un module électronique défectueux.

Selon un mode de réalisation particulier du dispositif, le moyen d'hébergement et de maintien d'un module électronique consiste en une cavité dont le fond est enduit de colle pour maintenir le module électronique en place. Ce mode de réalisation a pour avantage d'éviter la perte d'un module électronique.

Selon un mode de réalisation particulier du dispositif, le carrousel comprend en outre une couronne de diamètre extérieur supérieur à chacun des diamètres extérieurs du disque supérieur et du disque inférieur. Selon ce mode, le disque supérieur coopère avec le disque inférieur pour délimiter un logement dans lequel est maintenue une partie de la couronne de façon à laisser dépasser une partie libre de cette couronne. La couronne assure le lien mécanique entre le carrousel et la carte à puce électronique qui sert elle-même de support au dispositif Ce mode a pour avantage de simplifier la fabrication de la carte elle-même. En effet, la carte nécessite simplement un évidement équipé d'une fente dans lequel se loge la partie libre de la couronne.

Selon un mode de réalisation particulier de la carte à puce électronique, l'évidement est prolongé jusque vers un bord de la carte pour permettre le positionnement ou le retrait d'un module électronique du carrousel. Ce mode de réalisation permet avantageusement à l'utilisateur de configurer personnellement son dispositif, et éventuellement de remplacer un module électronique défectueux, bien que le carrousel soit maintenu sur une carte à puce électronique.

Selon un mode de réalisation particulier du lecteur de puces électroniques, le moyen d'entraînement en rotation est un galet qui entraîne en rotation le carrousel, ce galet étant lui-même entraîné en rotation par un utilisateur du lecteur. Ainsi l'utilisateur peut avantageusement changer d'application sans avoir à extraire son carrousel du lecteur.

### Brève description des dessins

D'autres caractéristiques et avantages de l'invention apparaîtront lors de la description qui suit faite en regard de figures annexées données à titre d'exemples non limitatifs.
La figure 1 est un schéma d'un mode de réalisation d'un dispositif selon l'invention.
La figure 2 est un schéma d'un mode de réalisation d'un dispositif selon l'invention destiné à être installé sur une carte à puce.
La figure 3 est l'angle en haut à droite d'une carte à puce électronique normalisée selon la norme ISO sur laquelle sont indiquées les distances entre deux modules électroniques.
La figure 4 est un schéma d'une carte à puce électronique façonnée pour accueillir le carrousel représenté aux figures 1 et 2.
La figure 5 représente la carte à puce électronique de la figure 4 équipée d'un dispositif selon l'invention.
La figure 6 représente une vue en coupe de la carte à puce électronique de la figure 5 selon la ligne VI-VI.
La figure 7 représente une vue en coupe de la carte à puce électronique et du dispositif de la figure 5 selon la ligne VII-VII.
La figure 8 représente un téléphone mobile équipé d'un réceptacle pour l'insertion d'un dispositif selon l'invention.

### Description d'un mode de réalisation

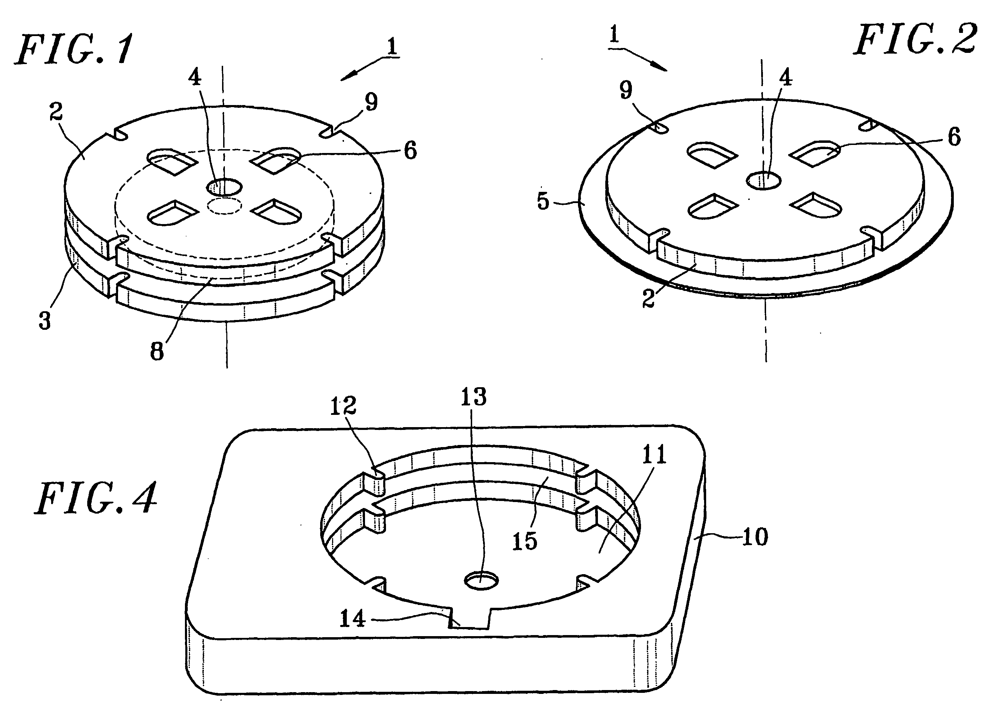

Un mode de réalisation d'un dispositif selon l'invention, illustré par la figure 1, consiste en un carrousel 1 qui comprend :
- un disque supérieur 2,
- un disque inférieur 3, et
- un moyen de rotation 4.

La figure 2 illustre un dispositif selon l'invention destiné à être installé sur une carte à puce. Le dispositif comprend en outre des éléments listés en regard de la figure 1 :
- une couronne 5.

Le disque supérieur 2 est équipé de quatre moyens 6 d'hébergement et de maintien d'un module électronique. Chaque moyen 6 consiste en une cavité qui héberge un module électronique comportant une puce. Chaque moyen 6 est disposé à une même distance du centre du disque et est équidistant des moyens 6 d'hébergement et de maintien situés de part et d'autre. Chaque moyen 6 peut être équipé de glissières dans lesquelles est glissé, puis maintenu, un module électronique. Selon une première alternative aux glissières, la cavité peut avoir un fond enduit de colle pour maintenir le module en place. Selon une seconde alternative aux glissières, les parois latérales de la cavité sont équipées d'une fente pour y glisser les bords d'un module électronique. Les disques 2, 3 supérieur et inférieur sont faits d'un matériau identique à celui d'une carte électronique, du PVC ou du PVCA par exemple. Le nombre maximum de moyens 6 est déterminé par la taille du carrousel. Dans le cas d'une carte électronique normalisée selon la norme IS07816, ce nombre est de quatre. En effet, la carte de type ID-1 de cette norme ISO a pour dimensions (en mm) :
largeur : [85.47, 85.72]
longueur : [53.92, 54.03]
épaisseur : 0.76+/-0.08

Les huit contacts d'un module électronique se positionnent en deux colonnes de quatre contacts équidistants. Chaque contact doit se trouver à l'intérieur d'une surface limitée par un petit rectangle de 2x1.7mm. Ces huit contacts s'inscrivent dans un rectangle d'au plus 9.3x9.7mm². Ce rectangle, positionné en haut à droite de la carte, se trouve au plus près à 10.25mm du petit côté de la carte et à 19.23mm du grand côté de la carte.

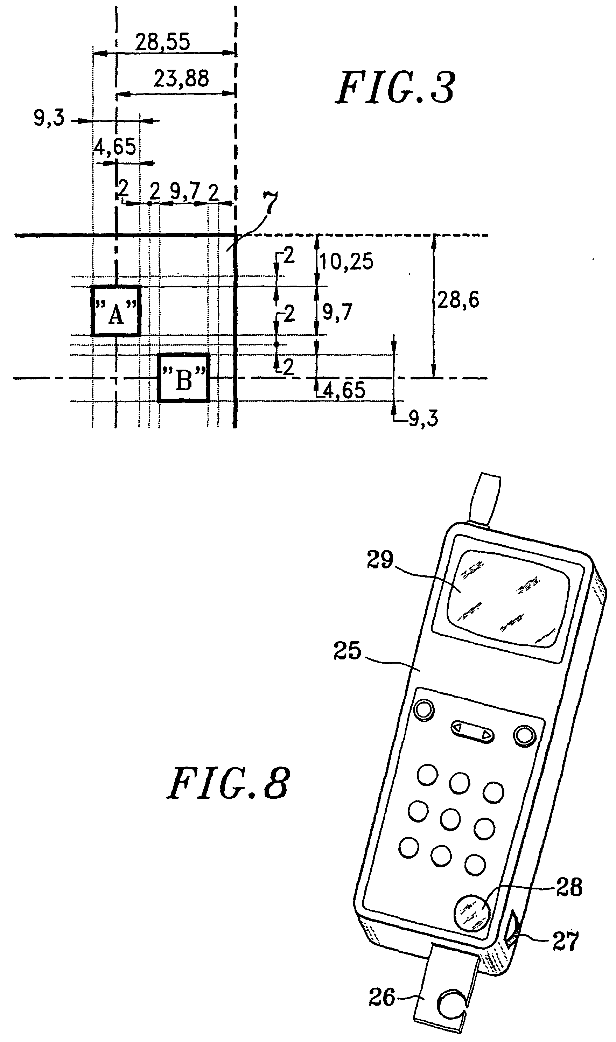

La figure 3 illustre l'angle en haut à droite d'une carte 7 sur laquelle sont disposées deux modules électroniques A et B. A occupe la position de lecture de puce. Selon la figure, il apparaît clairement que l'espace libre sur la carte 7 permet de disposer quatre modules électroniques : A, B et deux modules électroniques occupant des positions symétriques à A et B, chaque module électronique occupant une surface de 9.7x9.3mm². Il reste autour de chacune de ces surfaces une marge de 2mm.

Dans un mode particulier, la carte est équipée de deux carrousels identiques situés chacun sur un côté différent de la carte. Selon ce mode, la carte comporte huit modules électroniques qui supportent en tout huit applications.

Le disque 3 inférieur a sensiblement le même diamètre que le disque 2 supérieur, et il est fait dans un matériau identique ou similaire, du plastique par exemple.

Le moyen 4 de rotation consiste en un trou central découpé dans les deux disques 2, 3 pour permettre le passage d'un axe de rotation. Dans un autre mode, le moyen 4 de rotation consiste en une encoche de forme parallélépipédique.

Le disque 2 supérieur est découpé dans son épaisseur pour délimiter avec le disque 3 inférieur un logement 8 dans lequel est logée la couronne 5.

Le disque 2 supérieur est équipé sur sa périphérie d'un moyen 9 de maintien en position du carrousel pour assurer un positionnement précis du module électronique en position de lecture de puce. A cet effet, le disque 2 supérieur comprend autant d'encoches sur sa périphérie que de modules électroniques. Ces encoches forment le moyen 9 de maintien en position du carrousel. Le nombre d'encoches peut être supérieur au nombre de modules électroniques, voire inférieur. Le moyen 9 de maintien peut prendre différentes formes de réalisation équivalentes. Une seconde forme consiste à disposer des picots au lieu des encoches.

La couronne 5 a un diamètre extérieur supérieur au diamètre extérieur de chacun des disques 2, 3 et un diamètre intérieur supérieur au diamètre intérieur du logement 8. Après montage du carrousel, la couronne 5 est maintenue dans le logement 8 formé par les deux disques 2, 3. La couronne 5 assure le lien mécanique avec la carte. Ce lien peut être assuré selon des modes de réalisation équivalent à la couronne 5. Pour exemple, le disque 2 supérieur peut être découpé sur son épaisseur de façon à inclure la forme de la couronne 5, ou la carte elle-même peut être découpée pour inclure la forme de la couronne 5.

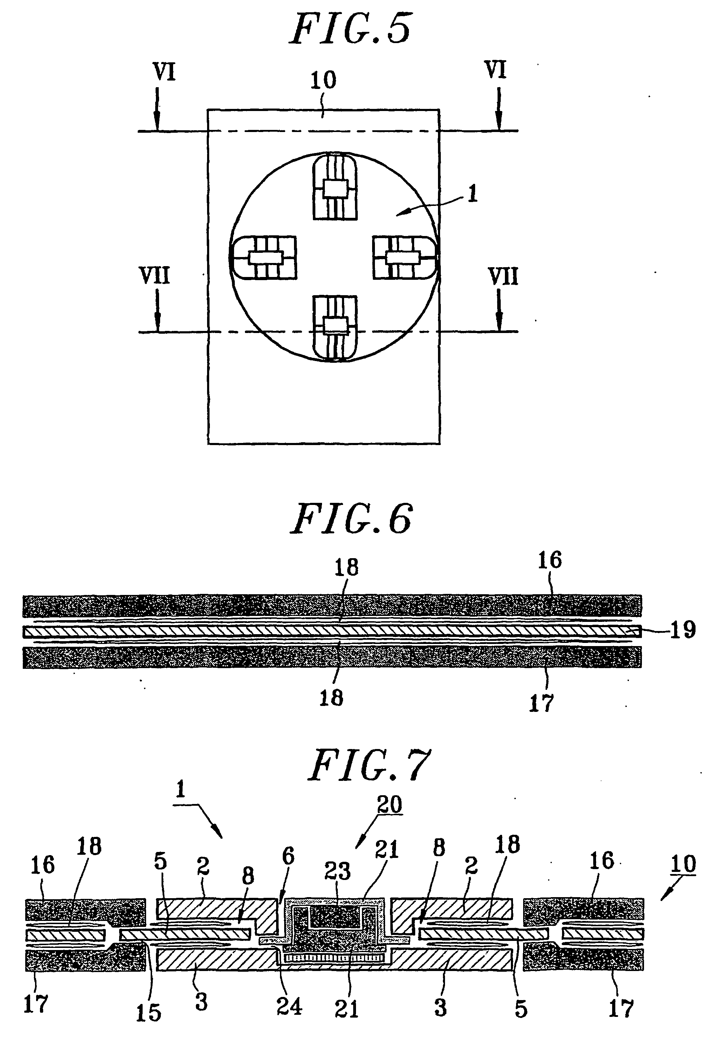

La figure 4 est un schéma d'une carte électronique façonnée pour accueillir un carrousel selon le mode de réalisation de l'invention illustré par la figure 2.

La carte 10 électronique est une carte typique dans laquelle un évidement 11 est effectué pour y accueillir un dispositif selon l'invention.

L'évidement 11 a la forme du carrousel, c'est-à-dire circulaire, avec un moyen 12 de blocage du carrousel qui coopère avec le moyen de maintien en position du carrousel. Selon l'illustration, le moyen 12 de blocage du carrousel consiste en des picots dont la forme coopère avec la forme des encoches du carrousel pour maintenir le carrousel dans une position donnée. Ainsi, si le carrousel comporte un moyen de maintien composé de picots, le moyen 12 de blocage consiste alors en des encoches ou en une lame métallique souple dont la position de repos correspond à un espacement entre les picots.

L'évidement 11 peut être débouchant sur les deux faces de la carte 10 ou sur seulement une face. Dans ce dernier cas, le carrousel est avantageusement protégé du côté non débouchant. Selon l'illustration, l'évidement 11 est au moins débouchant dans une zone 13 circulaire centrale pour permettre le passage d'un axe de rotation du carrousel. Selon l'illustration, l'évidement 11 est prolongé jusqu'à un bord de la carte. Ce prolongement 14 permet de sortir un module électronique du carrousel en le faisant glisser et de le remplacer par un autre module électronique.

Selon l'illustration, la carte 10 est équipée d'une fente 15 circulaire qui prolonge l'évidement 11 dans l'épaisseur de la carte 10. Cette fente 15 permet le maintien de la couronne du carrousel dans la carte 10. L'installation du carrousel sur la carte 10 est effectuée lors de la fabrication de la carte 10.

La figure 5 représente la carte 10 équipée d'un dispositif selon l'invention. La figure 6 représente une vue en coupe de la carte 10 selon la ligne VI-VI et la figure 7 une vue en coupe de la carte 10 et du carrousel 1 selon la ligne VII-VII.

La carte 10 comporte deux éléments 16, 17, typiquement en plastique, qui sont collés avec de la colle 18 de part et d'autre d'un élément 19 intermédiaire. Cet élément 19 intermédiaire est découpé à la forme de l'évidement agrandi de la dimension de la fente. Avant collage, le carrousel 1 est disposé dans l'évidement. Après collage, le carrousel 1 est maintenu dans la carte 10 par la couronne.

La coupe VI-VI représente les deux éléments 16, 17, séparés de l'élément 19 intermédiaire par un film de colle 18.

La coupe VII-VII représente un module 20 électronique, les disques 2, 3 supérieur et inférieur, la couronne 5, et les deux éléments 16, 17 de la carte 10. Le module électronique 20 comprend un support 21, un élément 22 en forme de U et une puce électronique 23. Le moyen 6 d'hébergement et de maintien du module 20 électronique consiste en une cavité dans laquelle les parois latérales sont équipées d'une fente 24 pour y glisser les bords du module 20 électronique. Le disque 2 supérieur délimite avec le disque 3 inférieur un logement 8 dans lequel peut être collée 18 une partie de la couronne 5. La partie externe de la couronne 5 est maintenue dans la fente 15 entre les deux éléments 16, 17 de la carte 10.

La figure 8 illustre un lecteur de puces électroniques incorporé dans un équipement à puces qui, dans l'exemple de la figure 8, est un téléphone 25 mobile, mais qui pourrait tout aussi bien être n'importe quel équipement à puces connu. Le lecteur de puces du téléphone 25 mobile comprend un réceptacle 26 pour insérer dans le téléphone un dispositif selon l'invention. Le téléphone 25 comprend en outre un moyen 27 d'entraînement en rotation du carrousel. le moyen 27 d'entraînement en rotation est un axe ou un galet. Le galet 27, tangent au carrousel et accessible de l'extérieur du téléphone, est lui-même entraîné en rotation par un utilisateur du téléphone. L'utilisateur tourne le galet pour positionner en lecture de puce, le module électronique sélectionné. Un dispositif 28 à visualisation directe de la carte (écran transparent) permet de visualiser les différents modules électroniques du dispositif selon l'invention et leur positionnement. Le dispositif 28 peut être plus élaboré et reconnaître la position des modules électroniques pour l'afficher sur un écran 29 d'affichage électronique.

## Revendications

1. Dispositif de support de puces électroniques, destiné à mettre en position de lecture de puce, dans un lecteur de puce, un module (20) électronique comprenant une puce (23) électronique, le dispositif consistant en un carrousel (1) qui comprend :
- un premier disque (2) équipé d'au moins deux moyens (6) d'hébergement et de maintien d'un module électronique, chaque moyen (6) hébergeant un module (20) électronique,
- un moyen (4) de rotation pour mettre en position de lecture de puce un des modules électroniques présents sur le premier disque (2) par une rotation d'au moins le premier disque (2), **caractérisé en ce que** le carrousel comporte un disque (3) inférieur, placé en dessous du premier disque.

2. Dispositif de support de puces électroniques selon la revendication 1, **caractérisé en ce que** le carrousel (1) comprend en outre :
- une couronne (5) qui assure le lien mécanique entre le carrousel (1) et un support (10) du dispositif, de diamètre extérieur supérieur à chacun des diamètres extérieurs du premier disque (2) et du disque (3) inférieur,
et **en ce que** le premier disque (2) coopère avec le disque (3) inférieur pour délimiter un logement (8) dans lequel est maintenue une partie de la couronne (5) de façon à laisser dépasser une partie libre de cette couronne (5).

3. Dispositif de support de puces électroniques selon l'une des revendications 1 ou 2 dans lequel le moyen (4) de rotation coopère avec le lecteur de puce pour faire tourner le carrousel (1).

4. Dispositif de support de puces électroniques selon l'une des revendications 1 ou 2, dans lequel le moyen (4) de rotation est une encoche de forme parallélépipédique formée dans le premier disque (2).

5. Dispositif de support de puces électroniques selon l'une des revendications 1 à 4, dans lequel chaque moyen (6) d'hébergement et de maintien d'un module électronique est équipé de glissières adaptées à un module (20) électronique.

6. Dispositif de support de puces électroniques selon l'une des revendications 1 à 5, dans lequel chaque moyen (6) d'hébergement et de maintien d'un module électronique consiste en une cavité dont le fond est enduit de colle pour maintenir le module (20) électronique en place.

7. Dispositif de support de puces électroniques selon l'une des revendications 1 à 4, dans lequel chaque moyen (6) d'hébergement et de maintien d'un module électronique consiste en une cavité dans laquelle les parois latérales sont équipées d'une fente (24) pour y glisser un module (20) électronique.

8. Dispositif de support de puces électroniques selon l'une des revendications 1 à 7, dans lequel le premier disque (2) est équipé sur sa périphérie d'un moyen (9) de maintien en position du carrousel.

9. Dispositif de support de puces électroniques selon la revendication 8, dans lequel le moyen (9) de maintien en position du carrousel consiste en au moins autant d'encoches sur la périphérie du premier disque (2) que de modules (20) électroniques.

10. Carte (10) à puce électronique, **caractérisée en ce qu'**elle comprend un évidement (11) pour accueillir un dispositif selon l'une des revendications 2 à 9, l'évidement (11) étant équipé d'une fente (15) apte à recevoir la partie libre de la couronne (5).

11. Carte (10) à puce électronique selon la revendication 10, dans laquelle l'évidement (11) est prolongé (14) jusque vers un bord de la carte (10) pour permettre l'extraction et l'introduction d'un module (20) électronique du carrousel (1).

12. Carte (10) à puce électronique selon l'une des revendications 10 ou 11 dans laquelle l'évidement (11) comporte un moyen (12) de blocage du carrousel (1) qui coopère avec le moyen (9) de maintien en position du carrousel (1) pour assurer un positionnement des modules (20) électroniques par rapport à la carte (10).

13. Carte (10) à puce électronique selon la revendication 12, dans laquelle le moyen (12) de blocage du carrousel (1) consiste en au moins autant de dents que de modules (20) électroniques sur le carrousel (1), ces dents coopérant avec les encoches du carrousel (1).

14. Lecteur de puces électroniques, **caractérisé en ce qu'**il comprend un réceptacle (26) pour insérer un dispositif selon l'une des revendications 1 à 9 et un moyen (27) d'entraînement en rotation du carrousel (1).

15. Lecteur selon la revendication 14, dans lequel le moyen (27) d'entraînement en rotation est un axe qui entraîne en rotation le carrousel (1).

16. Lecteur selon la revendication 14, dans lequel le moyen (27) d'entraînement en rotation est un galet qui entraîne en rotation le carrousel (1), ce galet étant lui-même entraîné en rotation par un utilisateur du téléphone (25).

17. Equipement (25) à puces électroniques, **caractérisé en ce qu'**il comprend un lecteur de puces électroniques selon l'une quelconque des revendications 14 à 16.

## Claims

1. An electronic chip support device for putting an electronic module (20) in a chip read position in a chip reader, the module including an electronic chip (23), the device consisting in a turntable (1) which comprises:
a first disk (2) fitted with at least two means (6) for harboring and holding respective electronic modules, each means (6) harboring an electronic module (20);
turning means (4) for positioning one of the electronic modules present on the first disk (2) in the chip read position by turning at least the first disk (2), the device being **characterized in that** the turntable includes a bottom disk (3) placed beneath the first disk.

2. An electronic chip support device according to claim 1, **characterized in that** the turntable (1) further includes:
· a ring (5) providing mechanical connection between the turntable (1) and a support (10) for the device, the ring being of outside diameter greater than the outside diameters of both the first disk (2) and the bottom disk (3),
and **in that** the first disk (2) co-operates with the bottom disk (3) to define a housing (8) in which a portion of the ring (5) is held so as to allow a free portion of the ring (5) to project.

3. An electronic chip support device according to claim 1 or claim 2, in which the turning means (4) co-operates with the chip reader to turn the turntable (1).

4. An electronic chip support device according to claim 1 or claim 2, in which the turning means (4) is a rectangular-shaped notch formed in the first disk (2).

5. An electronic chip support device according to any one of claims 1 to 4, in which each means (6) for harboring and holding an electronic module is fitted with slideways adapted to an electronic module (20).

6. An electronic chip support device according to any one of claims 1 to 5, in which each means (6) for harboring and holding an electronic module consists in a cavity whose bottom wall is coated in adhesive for holding the electronic module (20) in place.

7. An electronic chip support device according to any one of claims 1 to 4, in which each means (6) for harboring and holding an electronic module consists in a cavity having side walls fitted with respective slots (24) in which an electronic module (20) can be slid.

8. An electronic chip support device according to any one of claims 1 to 7, in which the first disk (2) is fitted at its periphery with means (9) for holding the turntable in position.

9. An electronic chip support device according claim 8, in which the means (9) for holding the turntable in position consists in at least as many notches in the periphery of the first disk (2) as there are electronic modules (20).

10. A smart card (10), **characterized in that** it includes a recess (11) for receiving a device according to any one of claims 2 to 9, the recess (11) including a slot (15) suitable for receiving the free portion of the ring (5).

11. A smart card (10) according to claim 10, in which the recess (11) is extended (14) to an edge of the card (10) to enable an electronic module (10) to be extracted from and inserted in the turntable (1).

12. A smart card (10) according to claim 10 or claim 11, in which the recess (11) includes means (12) for locking the turntable (1), said means co-operating with the means (9) for holding the turntable (1) in position to ensure that the electronic modules (20) are positioned relative to the card (10).

13. A smart card (10) according to claim 12, in which the means (12) for locking the turntable (1) consists in at least as many teeth as there are electronic modules (20) on the turntable (1), the teeth co-operating with the notches of the turntable (1).

14. An electronic chip reader, **characterized in that** it includes a receptacle (26) into which there can be inserted a device according to any one of claims 1 to 9, and means (27) for turning the turntable (1).

15. A reader according to claim 14, in which the means (27) for turning the turntable comprise a pin which turns the turntable (1).

16. A reader according to claim 14, in which the means (27) for turning the turntable is a wheel which turns the turntable (1), said wheel itself being turned by a user of the telephone (25).

17. Electronic chip equipment (25), **characterized in that** it includes an electronic chip reader according to any one of claims 14 to 16.

## Patentansprüche

1. Trägervorrichtung für elektronische Chips, die zur Chiplesepositionierung eines elektronischen Moduls (20) mit einem elektronischen Chip (23) in einem Chiplesegerät bestimmt ist, wobei die Vorrichtung aus einem Karussell (1) besteht, das Folgendes umfasst:
- eine erste, mit wenigstens zwei Unterbringungs- und Festhaltemitteln (6) eines elektronischen Moduls ausgerüstete Scheibe (2), wobei jedes Mittel (6) ein elektronisches Modul (20) beherbergt,
- ein Rotationsmittel (4) zur Chiplesepositionierung eines der auf der ersten Scheibe (2) vorhandenen elektronischen Modulen durch eine Rotation wenigstens der ersten Scheibe (2), **dadurch gekennzeichnet, dass** das Karussell eine unterhalb der ersten Scheibe platzierte untere Scheibe (3) umfasst.

2. Trägervorrichtung für elektronische Chips gemäß Anspruch 1, **dadurch gekennzeichnet, dass** das Karussell (1) darüber hinaus Folgendes umfasst:
- Eine Krone (5), die die mechanische Verbindung zwischen dem Karussell (1) und einem Träger (10) der Vorrichtung mit größerem Außendurchmesser als jeder der Außendurchmesser der ersten Scheibe (2) und der unteren Scheibe (3) gewährleistet,
und dass die erste Scheibe (2) mit der unteren Scheibe (3) zur Begrenzung einer Aufnahme (8) zusammenwirkt, in der ein Teil der Krone (5) derart festgehalten wird, dass ein freier Teil dieser Krone (5) hervorstehen gelassen wird.

3. Trägervorrichtung für elektronische Chips gemäß Anspruch 1 oder 2, in der das Rotationsmittel (4) mit dem Chiplesegerät zusammenwirkt, um das Karussell (1) zu drehen.

4. Trägervorrichtung für elektronische Chips gemäß Anspruch 1 oder 2, in der das Rotationsmittel (4) eine quaderförmige, in der ersten Scheibe (2) gebildete Einkerbung ist.

5. Trägervorrichtung für elektronische Chips gemäß Anspruch 1 bis 4, in der jedes Unterbringungs- und Festhaltemittel (6) eines elektronischen Moduls mit an ein elektronisches Modul (20) angepassten Gleitschienen ausgerüstet ist.

6. Trägervorrichtung für elektronische Chips gemäß Anspruch 1 bis 5, in der jedes Unterbringungs- und Festhaltemittel (6) eines elektronischen Moduls aus einer Aushöhlung besteht, deren Boden mit Klebstoff bestrichen ist, um das elektronische Modul (20) dort festzuhalten.

7. Trägervorrichtung für elektronische Chips gemäß Anspruch 1 bis 4, in der jedes Unterbringungs- und Festhaltemittel (6) eines elektronischen Moduls aus einer Aushöhlung besteht, in der die Seitenwände mit einem Schlitz (24) ausgestattet sind, um dort ein elektronisches Modul (20) gleiten zu lassen.

8. Trägervorrichtung für elektronische Chips gemäß Anspruch 1 bis 7, in der die erste Scheibe (2) an ihrer Peripherie mit einem Festhaltemittel (9) des Karussells in seiner Position ausgestattet ist.

9. Trägervorrichtung für elektronische Chips gemäß Anspruch 8, in der das Festhaltemittel (9) des Karussells in seiner Position aus wenigstens ebenso vielen Einkerbungen auf der Peripherie der ersten Scheibe (2) besteht wie elektronischen Modulen (20).

10. Elektronische Chipkarte (10), **dadurch gekennzeichnet, dass** sie eine Aussparung (11) umfasst, um eine Vorrichtung gemäß Anspruch 2 bis 9 aufzunehmen, wobei die Aussparung (11) mit einem zur Aufnahme des freien Teils der Krone (5) geeigneten Schlitz (15) ausgestattet is.

11. Elektronische Chipkarte gemäß Anspruch 10, in der die Aussparung (11) bis zu einem Rand der Karte (10) verlängert (14) ist, um das Herausziehen und das Einführen eines elektronischen Moduls (20) des Karussells (1) zu erlauben.

12. Elektronische Chipkarte (10) gemäß Anspruch 10 oder 11, in der die Aussparung (11) ein Blockiermittel (12) des Karussells (1) umfasst, das mit dem Festhaltemittel (9) des Karussells (1) in seiner Position zur Gewährleistung einer Positionierung der elektronischen Module (20) im Verhältnis zur Karte (10) zusammenwirkt.

13. Elektronische Chipkarte (10) gemäß Anspruch 12, in der das Blockiermittel (12) des Karussells (1) aus wenigstens ebenso vielen Zähnen wie elektronischen Modulen (20) auf dem Karussell (1) besteht, wobei diese Zähne mit den Einkerbungen des Karussells (1) zusammenwirken.

14. Lesegerät für elektronische Chips, **dadurch gekennzeichnet, dass** es einen Auffangträger (26) umfasst, um eine Vorrichtung gemäß Anspruch 1 bis 9 und ein Antriebsmittel (27) des Karussells (1) in Rotation einzufügen.

15. Lesegerät gemäß Anspruch 14, in dem das Antriebsmittel (27) in Rotation eine Achse ist, die das Karussell (1) in Rotation antreibt.

16. Lesegerät gemäß Anspruch 14, in dem das Antriebsmittel (27) in Rotation eine Antriebsrolle ist, die das Karussell (1) in Rotation antreibt, wobei diese Antriebsrolle ihrerseits durch einen Benutzer des Telefons (25) in Rotation angetrieben wird.

17. Ausrüstung (25) mit elektronischen Chips, **dadurch gekennzeichnet, dass** sie ein Lesegerät für elektronische Chips gemäß Anspruch 14 bis 16 umfasst.
